# FASCICULE DE BREVET EUROPEEN

(11) **EP 1 005 130 B1**
(45) Date de publication et mention de la délivrance du brevet: **23.09.2009**
(21) Numéro de dépôt: 99410123.6
(22) Date de dépôt: 05.10.1999
(51) Int. Cl.: H02H 3/00

(54) **Déclencheur avec une pluralité de moyens de réglage des paramètres de protection**
Auslöser mit mehreren Einstelleinrichtungen für die Schutzparameter
Tripping device comprising a plurality of adjusting means for the protection parameters

(30) Priorité: 28.10.1998 FR 9813712
(43) Date de publication de la demande: 31.05.2000
(73) Titulaire: Schneider Electric Industries SAS, 92500 Rueil-Malmaison (FR)
(72) Inventeur: Bellotto, Henry, Schneider Electric Industries SA, 38050 Grenoble Cédex 09 (FR); Suptitz, Eric, Schneider Electric Industries SA, 38050 Grenoble Cédex 09 (FR); Weynachter, Luc, Schneider Electric Industries SA, 38050 Grenoble Cédex 09 (FR)
(74) Mandataire: Jouvray, Marie-Andrée

(56) Documents cités:
- EP-A- 0 693 812
- EP-A- 0 716 491
- EP-A- 0 828 329
- US-A- 5 311 392

## Description

L'invention concerne un déclencheur comportant des commutateurs de réglage destinés à définir de premiers paramètres de protection représentatifs d'une surcharge ou d'un court-circuit et accessibles à un utilisateur, des moyens d'affichage, une unité de traitement connectée à des capteurs de courant et aux commutateurs de réglage, l'unité de traitement comportant :
- des premiers moyens de traitement numérique, connectés aux capteurs de courant et aux commutateurs de réglage, de manière à réaliser des fonctions de protection de base,
- des seconds moyens de traitement numérique, connectés aux premiers moyens de traitement et à des moyens de communication permettant la détermination, par téléréglage, de seconds paramètres de protection.

Les déclencheurs connus comportent classiquement, en face avant, des potentiomètres et/ou des commutateurs permettant d'effectuer les réglages des paramètres de protection. D'autres comportent un clavier à touches combiné avec un afficheur permettant de régler et de visualiser les paramètres de protection. Ces derniers comportent parfois également des moyens de réglage à distance, ou téléréglage des paramètres.

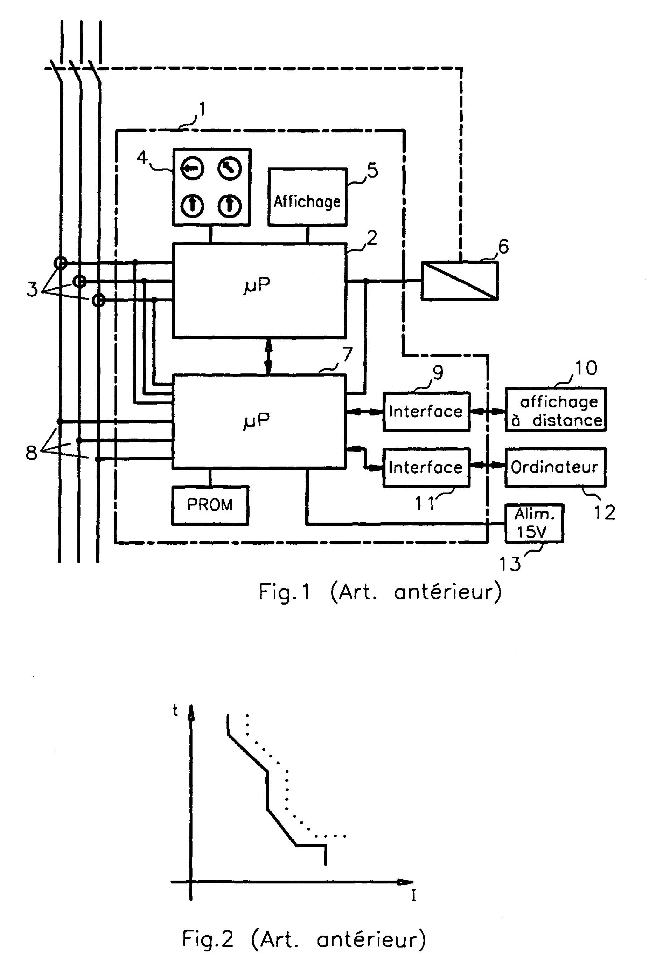

Le brevet US. 5.311.392 décrit un déclencheur comportant deux circuits de traitement à microprocesseur Un tel déclencheur 1 est illustré à la figure 1. Il comporte un premier circuit de traitement à microprocesseur 2, destiné à assurer la protection contre les surcharges et les court-circuits, à savoir les fonctions de protection long retard, court retard, instantané et éventuellement la protection terre. Ce premier circuit de traitement est classiquement connecté à des capteurs de courant 3, à des commutateurs 4 disposés sur la face avant du déclencheur, à un dispositif 5 d'affichage de la cause d'un déclenchement et à une bobine 6 de déclenchement. Il comporte un second circuit de traitement à microprocesseur 7 destiné à assurer des fonctions de communication et des fonctions additionnelles de surveillance et de protection (en tension, déphasage, puissance, fréquence...) Le second circuit de traitement 7 est connecté au premier par une liaison bidirectionnelle. Il est également connecté aux capteurs de courant 3 et à des capteurs de tension 8. Il est aussi connecté à une première interface 9, destinée à être connectée à un dispositif 10 d'affichage à distance, et à une seconde interface 11, destinée à être connectée à un ordinateur 12. Le second circuit de traitement 7 assure également une fonction de protection de sauvegarde en cas de mauvais fonctionnement du premier. La figure 2 représente, en trait continu, une courbe de déclenchement temps/courant utilisée par le premier circuit de traitement 2, prenant en compte les paramètres de protection définis par les commutateurs 4.

Le second circuit de traitement assure la fonction de sauvegarde en prenant en compte une seconde courbe de déclenchement, représentée en pointillés sur la figure 2. Les paramètres de protection correspondant à la seconde courbe de déclenchement sont systématiquement supérieurs aux valeurs fixées par les commutateurs. Ils peuvent être prédéterminés, non modifiables par l'utilisateur, ou bien réglables par l'intermédiaire des interfaces 9 et 11, ou bien être fixés par décalage de la première courbe. Le second circuit de traitement est alimenté en permanence par une alimentation auxiliaire 13 et comporte une sortie de déclenchement connectée à la bobine de déclenchement 6. En fonctionnement normal, le premier circuit de traitement 2 assure les fonctions de protection en courant en fonction du courant mesuré par les capteurs de courant 3 et des paramètres définis par les commutateurs, le second circuit de traitement assurant des fonctions de mesure et de protection additionnelles. En cas de défaillance du premier circuit de traitement, le second assure les fonctions de protection en courant en utilisant les mêmes valeurs du courant mesuré par les capteurs 3 et les paramètres de sauvegarde correspondant à la seconde courbe de la figure 2.

L'invention a pour but un déclencheur ayant des moyens de réglage des paramètres de protection adaptés aussi bien à un déclencheur bas de gamme qu'à un déclencheur haut de gamme.

Selon l'invention, ce but est atteint par le fait que les moyens d'affichage sont connectés aux seconds moyens de traitement, l'unité de traitement comportant des moyens de comparaison des premiers et seconds paramètres, des moyens de détermination de troisièmes paramètres de protection, représentatifs du plus faible des premiers et seconds paramètres, les moyens d'affichage affichant les troisièmes paramètres de protection et l'unité de traitement produisant un signal de déclenchement en fonction du courant mesuré par les capteurs et des troisièmes paramètres de protection.

Selon une première variante, les premiers moyens de traitement produisent un premier signal de déclenchement en fonction du courant mesuré par les capteurs de courant et des premiers paramètres de protection, les seconds moyens de traitement produisant un second signal de déclenchement en fonction du courant mesuré par les capteurs de courant et des troisièmes paramètres de protection, un circuit logique OU, fournissant un signal de déclenchement lorsqu'il reçoit un premier ou un second signal de déclenchement.

Selon une seconde variante, préférentielle, les premiers moyens de traitement produisent un signal de déclenchement en fonction du courant mesuré par les capteurs de courant et des troisièmes paramètres de protection.

Selon un développement de l'invention, le déclencheur comporte un clavier connecté à l'unité de traitement, destiné à définir de quatrièmes paramètres de protection et accessible à un utilisateur, l'unité de traitement déterminant les troisièmes paramètres de protection à partir du plus faible des premiers, seconds et quatrièmes paramètres.

Selon un autre développement de l'invention, le déclencheur comporte un capot recouvrant les commutateurs de réglage, le déclencheur comportant des moyens d'inhibition de la fonction de réglage du clavier en position de fermeture du capot.

Le capot est, de préférence constitué par une porte disposée sur la face avant du déclencheur et recouvrant les commutateurs de réglage en position de fermeture du capot, la porte comportant un ergot actionnant un élément complémentaire de l'unité de traitement en position de fermeture du capot, de manière à entraîner l'inhibition de la fonction de réglage du clavier. L'ergot est, de préférence, cassable, de manière à permettre la suppression de l'inhibition de la fonction de réglage du clavier en position de fermeture du capot.

Les avantages et caractéristiques de l'invention ressortiront plus clairement de la description suivante de modes particuliers de réalisation, donnés à titre d'exemples non limitatifs, et représentés aux dessins annexés sur lesquels :

La figure 1 illustre un déclencheur à deux microprocesseurs selon l'art antérieur, tel que décrit ci-dessus.

La figure 2 représente les courbes de déclenchement du déclencheur selon la figure 1.

La figure 3 représente un mode de réalisation particulier d'un déclencheur selon l'invention.

La figure 4 représente les courbes de déclenchement d'un déclencheur selon la figure 3.

La figure 5 illustre un mode particulier de réalisation d'un organigramme de détermination des paramètres de protection d'un déclencheur selon l'invention.

La figure 6 illustre une variante de l'organigramme selon la figure 5.

La figure 7 représente une variante de réalisation du déclencheur selon la figure 3.

La figure 8 représente un mode particulier de réalisation de la face avant d'un déclencheur selon l'invention, comportant un capot en position fermée.

La figure 9 illustre en position d'ouverture, un mode de réalisation particulier du capot selon la figure 8.

La figure 10 représente, en vue agrandie, un ergot cassable du capot selon la figure 9.

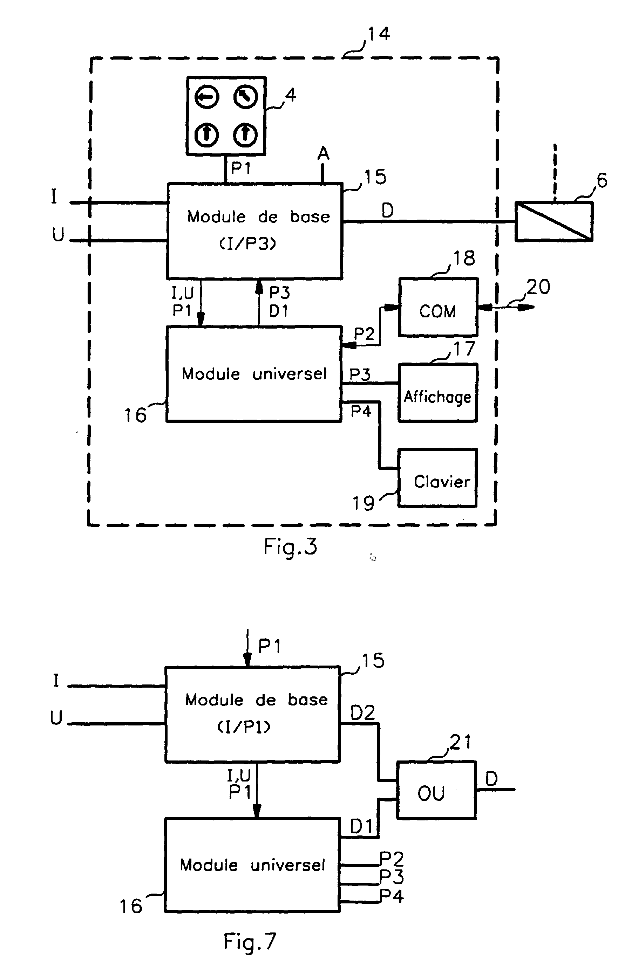

Le déclencheur 14 selon la figure 3 comporte un module de base 15 constituant une première unité de traitement numérique, destiné à assurer les fonctions de protection en surcharge et en court-circuit (long retard, court retard, instantané et éventuellement protection terre) du déclencheur. Ce module est, de préférence, constitué par un circuit intégré de type ASIC et peut comporter un microprocesseur. Il est connecté, comme dans l'art antérieur, à des capteurs de courant qui lui fournissent les valeurs I du courant dans les conducteurs du réseau à protéger et à la bobine de déclenchement 6 à laquelle il fournit un signal de déclenchement D en cas de surcharge ou de court-circuit. Il est classiquement connecté à des commutateurs 4 qui lui fournissent des premiers paramètres de protection P1.

Un tel module de base est utilisé pour toute une gamme de déclencheurs. Les plus simples ne comportent que les éléments décrits ci-dessus. Un déclencheur haut de gamme selon l'invention comporte les mêmes éléments, complétés comme représenté à la figure 3. Il comporte un module universel constituant une seconde unité de traitement numérique, de préférence à microprocesseur. Le module universel 16 est connecté à un dispositif d'affichage 17, disposé en face avant du déclencheur, à un module de communication 18 et, éventuellement, à un clavier 19, ainsi qu'au module de base 15.

Le module de communication 18 est connecté à un bus externe 20 permettant, entre autres, de fournir au déclencheur, par téléréglage, des seconds paramètres de protection P2. Dans un mode de réalisation préférentiel, le module universel 16 reçoit du module de base 15 les valeurs I et U des courants et des tensions mesurées, ainsi que les valeurs des premiers paramètres de protection P1 fixés par les commutateurs. Il détermine les paramètres de protection P3 devant être pris en compte par le déclencheur 14, ces paramètres étant affichés sur le dispositif d'affichage 17, lors de leur réglage ou sur demande, et étant transmis au module de base 15.

Le module universel 16 assure, de préférence, également des fonctions additionnelles de protection, par exemple en tension, en puissance, en fréquence, à partir des valeurs de courant et de tension qui lui sont fournies par le module de base. Le calcul de la puissance peut être effectué par le module de base, puis transmis au module universel, ou directement par le module universel. Celui-ci peut éventuellement être connecté à des capteurs de courant additionnels (non représentés) plus précis permettant d'effectuer une analyse plus précise du courant circulant dans les conducteurs à protéger, par exemple une analyse d'harmoniques. Le module universel reçoit, par l'intermédiaire du module de communication 18 ou du clavier 19, les valeurs des paramètres à prendre en compte par les fonctions additionnelles de protection. En cas de défaut, il produit un signal d'alarme et/ou un signal de déclenchement D1, qui est transmis au module de base 15 qui provoque l'excitation de la bobine de déclenchement 6.

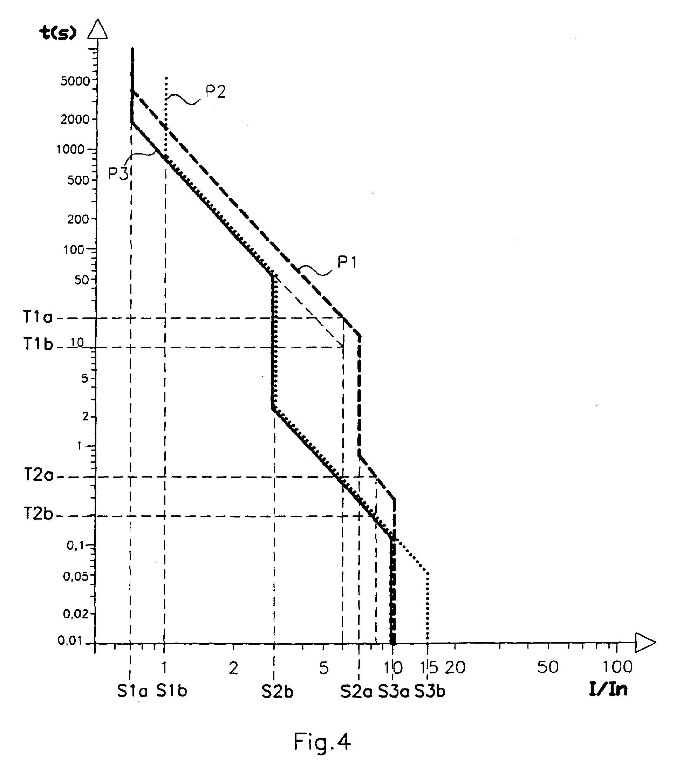

Le déclencheur 14 prend toujours en compte le paramètre P3 représentatif du plus faible des premiers et seconds paramètres Plet P2, comme représenté à la figure 4.

Trois courbes de déclenchement temps/courant, correspondant respectivement aux paramètres P1, P2 et P3 sont illustrées sur la figure 4. Chaque courbe représente, en coordonnées logarithmiques, le temps de déclenchement t en fonction du rapport I/In, In étant le courant nominal du déclencheur qui peut être déterminé de manière connue par un module de calibrage.

Sur la figure 4, les paramètres P1 ont les valeurs suivantes :
Seuil long retard Sla = 0,7In
Temporisation long retard Tla = 20s à 6In
Seuil court retard S2a = 7In
Temporisation court retard T2a = 0,5s à 8In
Seuil instantané S3a = 10In

Les paramètres P2 ont les valeurs suivantes :
Seuil long retard S1b = In
Temporisation long retard Tlb = 10s à 6In
Seuil court retard S2b = 3In
Temporisation court retard T2b = 0,2s à 8In
Seuil instantané S3b = 15In

Les courbes de déclenchement long retard et court retard sont, dans le mode de réalisation représenté, des courbes en I²t.

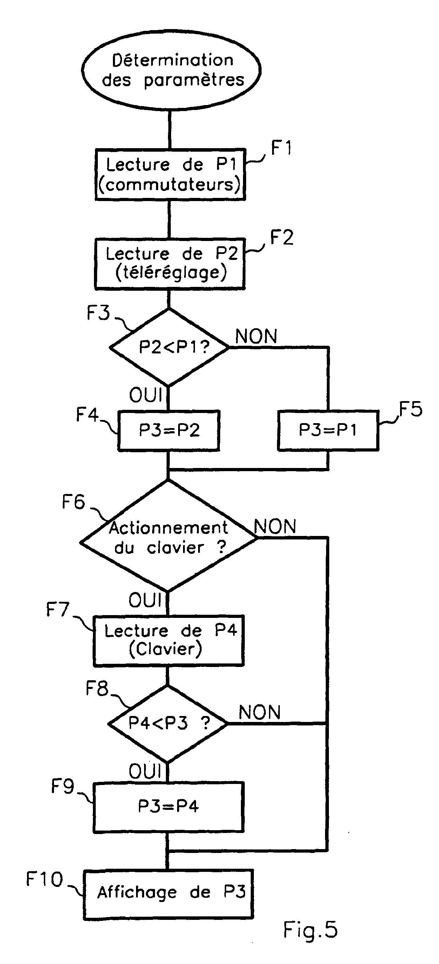

Un sous-programme de détermination des troisièmes paramètres de protection utilisés par le déclencheur est illustré à la figure 5. Dans le mode de réalisation particulier représenté dans une étape F1, le microprocesseur du module universel 16 lit les paramètres P1 définis par les commutateurs 4, qui lui sont transmis par le module de base 15. Puis il lit, dans une étape F2, les paramètres P2 correspondant au téléréglage et qui lui ont été transmis par le bus 20 et le module de communication 18.

Dans une étape F3, il compare chaque paramètre P2 au paramètre P1 associé, c'est à dire qu'il compare S1a à S1b, S2a à S2b, T1a à T1b, T2a à T2b et S3a à S3b. Si le paramètre P2 est inférieur au paramètre P1 associé (sortie OUI de F3), il donne au paramètre P3 associé la valeur P2 (étape F4). Dans le cas contraire (sortie NON de F3), le paramètre P3 prend la valeur P1 correspondante (étape F5).

Dans le mode de réalisation de la figure 4, P3 prend en conséquence les valeurs suivantes :
Seuil long retard : S1 = S1a = 0,7In
Temporisation long retard : T1 = T1b = 10s à 6In
Seuil court retard : S2 = S2b = 3In
Temporisation court retard : T2 = T2b = 0,2s à 8In
Seuil instantané : S3 = S3a

Lorsque le clavier 19 est activé, de quatrièmes paramètres P4 sont transmis au module universel 16. Le microprocesseur du module universel vérifie dans une étape F6 (figure 5) si le clavier est actionné. Si c'est le cas (sortie OUI de F6), il lit les valeurs des paramètres P4 dans une étape F7, puis, dans une étape F8, il compare les paramètres P4 aux paramètres P3 associés. Si un paramètre P4 est inférieur au paramètre P3 associé, (sortie OUI de F8), le paramètre P3 prend la valeur P4 correspondante. Après l'étape F9, ou s'il n'y a pas actionnement du clavier (sortie NON de F6), ou si P4 n'est pas inférieur à P3 (sortie NON de F8), le microprocesseur du module universel procède à l'affichage des paramètres P3 (étape F10) sur le dispositif d'affichage 17, disposé en face avant du déclencheur.

Dans le mode de réalisation de la figure 3, les paramètres P3 sont transmis au module de base 15 qui assure les fonctions de protection en courant de base en fonction du courant I mesuré par les capteurs de courant et des troisièmes paramètres de protection P3. Le module universel peut également assurer ces fonctions, de manière redondante, ou n'assurer que des fonctions de protection additionnelles et des fonctions de mesure.

Le déclencheur 14 décrit ci-dessus possède ainsi trois moyens de réglage des paramètres de protection en courant : les commutateurs 4 disposés en face avant, le téléréglage par l'intermédiaire du bus 20 et du module de communication 18 et le clavier 19 disposé en face avant du déclencheur. Les déclencheurs bas de gamme ne comportent que les commutateurs. Ceux-ci sont conservés sur le déclencheur haut de gamme comportant un clavier et un afficheur et pouvant être paramétré par téléréglage. Le maintien des commutateurs sur les déclencheurs haut de gamme permet à l'utilisateur de continuer à utiliser le type de réglage par commutateurs dont il a l'habitude et de procéder de manière identique sur tous les déclencheurs de la gamme. Cependant, avec un déclencheur haut de gamme, il peut, s'il le désire, utiliser le clavier à la place des commutateurs ou utiliser la programmation à distance.

Le déclencheur choisissant toujours le paramètre le plus faible, les commutateurs peuvent être considérés comme définissant la protection ultime de l'installation, c'est à dire une courbe de déclenchement qui ne peut être dépassée, ni par un réglage local par l'intermédiaire du clavier, ni à distance par l'intermédiaire du module de communication. La fiabilité du système reste celle du module de base pour tous les déclencheurs de la gamme. En effet, si le module universel 16 est en panne, le module de base 15 continue de fonctionner.

De plus, la manoeuvre d'un commutateur déclenche, comme le téléréglage ou le réglage par clavier, l'affichage en face avant du paramètre pris en compte par le déclencheur.

Le module de base 15 peut comporter une entrée recevant un signal A (figure 3) permettant d'autoriser ou non la prise en compte des paramètres fournis par téléréglage. Par exemple, si le signal A est à un niveau logique 1 (5V par exemple), le module de base tient compte des paramètres P3. Par contre, si le signal A est à un niveau logique 0 (0V par exemple), alors il ne tient pas compte des paramètres P3 et effectue automatiquement la protection en fonction des paramètres P1 fournis par les commutateurs. Dans ce cas, cette information est de préférence, transmise au module universel qui prend comme valeurs P3 les valeurs des paramètres P1 de manière à les afficher, l'affichage correspondant ainsi à la valeur réellement prise en compte par la protection.

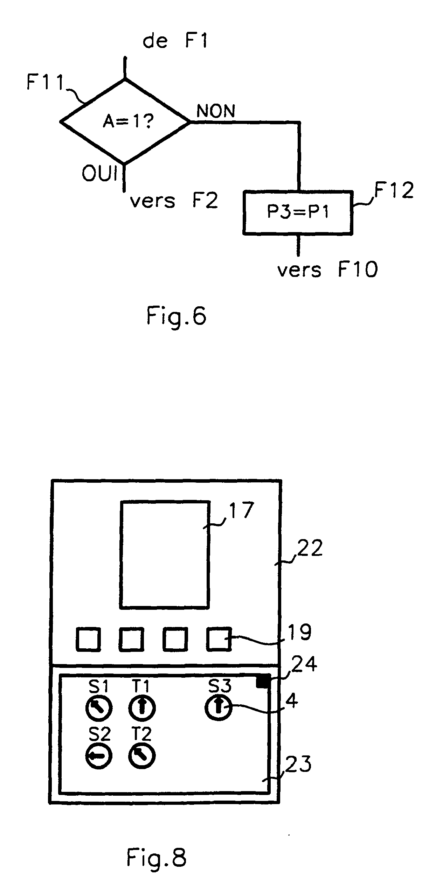

Un sous programme illustrant cette variante est représenté à la figure 6. Il comporte une étape F11, réalisée après l'étape F1, de vérification de la valeur de A. Si A=1 (sortie OUI de F11), le module de base est autorisé à prendre en compte le téléréglage et le microprocesseur du module universel 16 passe à l'étape F2. Par contre, si A n'est pas égal à 1, (sortie NON de F11), alors, dans une étape F12, les paramètres P3 prennent la valeur des paramètres P1 correspondant, puis le microprocesseur passe directement à l'étape F10, ou éventuellement à l'étape F6 si l'on veut que le module de base puisse quand même tenir compte d'un réglage par clavier.

Dans la variante de réalisation de la figure 7, le module universel 16 et le module de base 15 sont tous deux connectés à un circuit logique 21, réalisant une fonction OU et connecté à la bobine de déclenchement 6. Le module de base 15 ne tient compte que des paramètres P1, tandis que le module universel 16 détermine, comme précédemment, les valeurs P3 les plus faibles parmi les paramètres P1, P2 et P4 et affiche les paramètres P3. Il réalise une protection de base en fonction des paramètres P3 et des valeurs du courant I qui lui sont transmises par le module de base. En cas de défaut, le module 16 universel fournit au circuit 21 un signal de déclenchement D1 en fonction des paramètres P3 et le module de base fournit au circuit 21 un signal de déclenchement D2 en fonction des paramètres P1. Le signal de déclenchement D fourni en sortie du circuit 21 correspond ainsi également à une courbe de déclenchement prenant en compte le paramètre le plus faible.

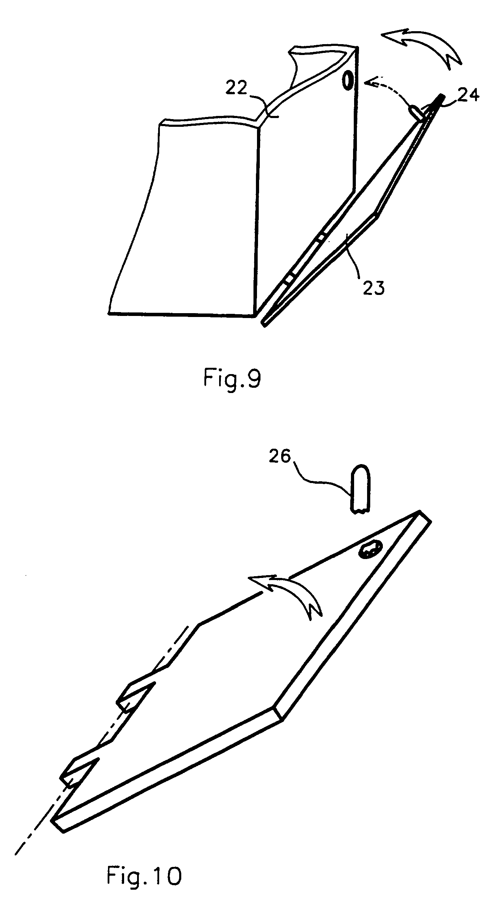

Dans les déclencheurs bas de gamme, il est connu de recouvrir les commutateurs de réglage par un capot, de préférence transparent qui peut être plombé, de manière à interdire toute modification ultérieure de la position des commutateurs ou à réserver la possibilité de modifier les paramètres à des personnes autorisées. La face avant 22 du déclencheur représenté à la figure 8 comporte un tel capot 23, constitué par une porte transparente qui peut être ouverte pour accéder aux commutateurs de réglage 4. La porte est représentée en position ouverte sur la figure 9. Dans un mode de réalisation préférentiel, lorsque le capot 23 est fermé, la clavier 19 reste accessible mais sa fonction de réglage est inhibée. Ainsi, le clavier permet, par exemple, de demander l'affichage des paramètres de protection P3, des valeurs de courant ou de tension mesurées, de valeurs de puissance calculées... Cependant, il ne peut plus, en position de fermeture du capot 23, fournir de nouveaux paramètres de protection P4.

La porte comporte, par exemple, un ergot 24 qui actionne un élément complémentaire constitué de préférence par un contact électronique situé sur une carte électronique de l'unité de traitement, de préférence du module universel 16.

Lorsque la porte est fermée, le contact 25 est actionné et le logiciel du module universel interdit l'entrée de paramètres de protection P4 par l'intermédiaire du clavier 19.

L'ergot 24 est de préférence cassable. L'enlèvement de la partie cassable 26 de l'ergot (fig.10) supprime l'inhibition de la fonction de réglage du clavier. Le plombage du capot permet alors d'interdire une modification de la protection ultime de l'installation, telle que déterminée par les commutateurs 4, tout en permettant une modification de la protection par l'intermédiaire du clavier 19.
L'invention s'applique non seulement à des courbes de déclenchement long retard et court retard en I²t comme sur la figure 4, mais à tout type de courbe de déclenchement (à temps constant, extrêmement inverse...)

L'invention permet donc d'obtenir une véritable cohérence entre trois niveaux de réglage (commutateurs, téléréglage et clavier). L'utilisation d'un module de base, de préférence sous forme d'ASIC, quel que soit le type de déclencheur permet d'augmenter la fiabilité du déclencheur. En effet, la complexité des fonctions de communication, d'affichage, .... réalisées par le module universel, ne détériore pas la fiabilité de la protection de base réalisée par l'ASIC.

## Revendications

1. Déclencheur comportant des commutateurs de réglage (4) destinés à définir de premiers paramètres de protection (P1) représentatifs d'une surcharge ou d'un court-circuit et accessibles à un utilisateur, des moyens d'affichage (17), une unité de traitement connectée à des capteurs de courant (3) et aux commutateurs de réglage (4), l'unité de traitement comportant :
- des premiers moyens de traitement numérique (15), connectés aux capteurs de courant (3) et aux commutateurs de réglage (4), de manière à réaliser des fonctions de protection de base,
- des seconds moyens de traitement numérique (16), connectés aux premiers moyens de traitement (15) et à des moyens de communication (18) permettant la détermination, par téléréglage, de seconds paramètres de protection P2, déclencheur **caractérisé en ce que** les moyens d'affichage (17) sont connectés aux seconds moyens de traitement (16), l'unité de traitement comportant des moyens (F3) de comparaison des premiers (P1) et seconds (P2) paramètres, des moyens (F4, F5) de détermination de troisièmes paramètres de protection (P3), représentatifs du plus faible des premiers et seconds paramètres, les moyens d'affichage affichant les troisièmes paramètres de protection (P3) et l'unité de traitement produisant un signal de déclenchement (D) en fonction du courant (I) mesuré par les capteurs (3) et des troisièmes paramètres de protection (P3).

2. Déclencheur selon la revendication 1, **caractérisé en ce que** les premiers moyens de traitement (15) produisent un premier signal de déclenchement (D2) en fonction du courant (I) mesuré par les capteurs de courant (3) et des premiers paramètres de protection (P1), les seconds moyens de traitement (16) produisant un second signal de déclenchement (D1) en fonction du courant (I) mesuré par les capteurs de courant (3) et des troisièmes paramètres de protection (P3), un circuit logique OU (21) fournissant un signal de déclenchement (D) lorsqu'il reçoit un premier ou un second signal de déclenchement.

3. Déclencheur selon la revendication 1, **caractérisé en ce que** les premiers moyens de traitement (15) produisent un signal de déclenchement (D) en fonction du courant (I) mesuré par les capteurs de courant (3) et des troisièmes paramètres de protection (P3).

4. Déclencheur selon l'une quelconque des revendications 1 à 3, **caractérisé en ce qu'**il comporte un clavier (19) connecté à l'unité de traitement, destiné à définir de quatrièmes paramètres de protection (P4) et accessible à un utilisateur, l'unité de traitement déterminant les troisièmes paramètres de protection (P3) à partir du plus faible des premiers, seconds et quatrièmes paramètres (P1, P2, P4).

5. Déclencheur selon la revendication 4, **caractérisé en ce que** le clavier (19) est connecté aux seconds moyens de traitement (16).

6. Déclencheur selon l'une des revendications 4 et 5, **caractérisé en ce qu'**il comporte un capot (23) recouvrant les commutateurs de réglage (4), le déclencheur comportant des moyens d'inhibition de la fonction de réglage du clavier (19) en position de fermeture du capot.

7. Déclencheur selon la revendication 6, **caractérisé en ce qu'**il comporte des moyens de plombage du capot en position de fermeture, de manière à interdire toute modification ultérieure de la position des commutateurs (4).

8. Déclencheur selon l'une des revendications 6 et 7, **caractérisé en ce que** le capot (23) est constitué par une porte disposée sur la face avant (22) du déclencheur et recouvrant les commutateurs de réglage (4) en position de fermeture du capot, la porte comportant un ergot (24) actionnant un élément complémentaire (25) de l'unité de traitement en position de fermeture du capot, de manière à entraîner l'inhibition de la fonction de réglage du clavier.

9. Déclencheur selon la revendication 8, **caractérisé en ce que** l'ergot est cassable (26), de manière à permettre la suppression de l'inhibition de la fonction de réglage du clavier en position de fermeture du capot (23).

10. Déclencheur selon l'une quelconque des revendications 1 à 9, **caractérisé en ce que** les premiers moyens de traitement (15) comportent une entrée (A) permettant d'autoriser ou non la prise en compte des paramètres (P2) fournis par téléréglage.

## Claims

1. A trip device comprising setting selector switches (4) designed to define first protection parameters (P1) representative of an overload or a short-circuit and accessible to a user, display means (17), a processing unit connected to current sensors (3) and to the setting selector switches (4), the processing unit comprising:
- first digital processing means (15) connected to the current sensors (3) and to the setting selector switches (4) in order to perform basic protection functions,
- second digital processing means (16) connected to the first processing means (15) and to communication means (18) enabling second protection parameters (P2) to be set by remote setting,
a trip device **characterized in that** the display means (17) are connected to the second processing means (16), the processing unit comprising means (F3) for comparing the first (P1) and second (P2) parameters, means (F4, F5) for determining third protection parameters (P3) representative of the lower of the first and second parameters, the display means displaying the third protection parameters (P3) and the processing unit producing a trip signal (D) according to the current (I) measured by the current sensors (3) and to the third protection parameters (P3).

2. The trip device according to claim 1, **characterized in that** the first processing means (15) produce a first trip signal (D2) according to the current (I) measured by the current sensors (3) and to the first protection parameters (P1), the second processing means (16) producing a second trip signal (D1) according to the current (I) measured by the current sensors (3) and to the third protection parameters (P3), a logic OR circuit (21) supplying a trip signal (D) when it receives a first or a second trip signal.

3. The trip device according to claim 1, **characterized in that** the first processing means (15) produce a trip signal (D) according to the current (I) measured by the current sensors (3) and to the third protection parameters (P3).

4. The trip device according to any one of the claims 1 to 3, **characterized in that** it comprises a keypad (19) connected to the processing unit, designed to define fourth protection parameters (P4) and accessible to a user, the processing unit determining the third protection parameters (P3) from the lowest of the first, second and fourth parameters (P1, P2, P4).

5. The trip device according to claim 4, **characterized in that** the keypad (19) is connected to the second processing means (16).

6. The trip device according to either one of claims 4 to 5, **characterized in that** it comprises a cover (23) covering the setting selector switches (4), the trip device comprising means for disabling the setting adjustment function of the keypad (19) in the closed position of the cover.

7. The trip device according to claim 6, **characterized in that** it comprises means for sealing the cover in the closed position, so as to prevent any subsequent modification of the position of the selector switches (4).

8. The trip device according to either one of claims 6 or 7, **characterized in that** the cover (23) is constituted by a door located on the front panel (22) of the trip device and covering the setting selector switches (4) in the closed position of the cover, the door comprising a spigot (24) actuating a complementary element (25) of the processing unit in the closed position of the cover so as to cause disabling of the setting adjustment function of the keypad.

9. The trip device according to claim 8, **characterized in that** the spigot (26) is breakable so that disabling of the setting adjustment function of the keypad in the closed position of the cover (23) can be overridden.

10. The trip device according to any one of claims 1 to 9, **characterized in that** the first processing means (15) comprise an input (A) enabling the parameters (P2) supplied by remote setting to be taken into account or not.

## Patentansprüche

1. Auslöser mit Einstellreglern (4), die zur Festlegung von ersten, eine Überlast oder einen Kurzschluss abbildenden Schutzparametern (P1) dienen und für einen Bediener zugänglich sind, sowie mit Anzeigemitteln (17) und einer Verarbeitungseinheit, die mit Stromwandlern (3) sowie mit den Einstellreglern (4) verbunden ist, welche Verarbeitungseinheit
- erste digitale Verarbeitungsmittel (15), die zur Sicherstellung der Basis-Schutzfunktionen mit den Stromwandlern (3) und den Einstellreglern (4) verbunden sind,
- sowie zweite digitale Verarbeitungsmittel (16) umfasst, die mit den ersten Verarbeitungsmitteln (15) sowie mit Kommunikationsmitteln (18) verbunden sind, die eine Festlegung von zweiten Schutzparametern P2 durch Ferneinstellung erlauben, welcher Auslöser **dadurch gekennzeichnet ist, dass** die Anzeigemittel (17) mit den zweiten Verarbeitungsmitteln (16) verbunden sind, wobei die Verarbeitungseinheit Mittel (F3) zum Vergleich der ersten (P1) und der zweiten Parameter (P2) sowie Mittel (F4, F5) zur Festlegung von dritten Schutzparametern (P3) umfasst, die den niedrigeren der beiden ersten und zweiten Parameter abbilden, die Anzeigemittel die dritten Schutzparameter (P3) anzeigen und die Verarbeitungseinheit ein Auslösesignal (D) in Abhängigkeit von dem durch die Stromwandler (3) gemessenen Strom (I) sowie von den dritten Schutzparametern (P3) erzeugt.

2. Auslöser nach Anspruch 1, **dadurch gekennzeichnet, dass** die ersten Verarbeitungsmittel (15) ein erstes Auslösesignal (D2) in Abhängigkeit von dem durch die Stromwandler (3) gemessenen Strom (I) sowie von den ersten Schutzparametern (PI) erzeugen, die zweiten Verarbeitungsmittel (16) ein zweites Auslösesignal (D1) in Abhängigkeit von dem durch die Stromwandler (3) gemessenen Strom (I) sowie von den dritten Schutzparametern (P3) erzeugen und eine logische ODER-Schaltung (21) ein Auslösesignal (D) liefert, wenn sie mit einem ersten oder einem zweiten Auslösesignal beaufschlagt wird.

3. Auslöser nach Anspruch 1, **dadurch gekennzeichnet, dass** die ersten Verarbeitungsmittel (15) ein Auslösesignal (D) in Abhängigkeit von dem durch die Stromwandler (3) gemessenen Strom (1) sowie von den dritten Schutzparametern (P3) erzeugen.

4. Auslöser nach irgendeinem der Ansprüche 1 bis 3, **dadurch gekennzeichnet, dass** er ein mit der Verarbeitungseinheit verbundenes Tastenfeld (19) umfasst, das zur Festlegung von vierten Schutzparametern (P4) dient und für den Bediener zugänglich ist, wobei die Verarbeitungseinheit die dritten Schutzparameter (P3) aus dem niedrigsten der ersten, zweiten und vierten Schutzparameter (PI, P2, P4) ableitet.

5. Auslöser nach Anspruch 4, **dadurch gekennzeichnet, dass** das Tastenfeld (19) mit den zweiten Verarbeitungsmitteln (16) verbunden ist.

6. Auslöser nach einem der Ansprüche 4 und 5, **dadurch gekennzeichnet, dass** er eine Abdeckung (23) für die Einstellregler (4) umfasst, wobei der Auslöser Mittel zum Sperren der Einstellfunktion des Tastenfeldes (19) in der Schließstellung der Abdeckung umfasst.

7. Auslöser nach Anspruch 6, **dadurch gekennzeichnet, dass** er Plombiermittel zur Sicherung der Abdeckung in der Schließstellung umfasst, derart dass eine nachträgliche Änderung der Stellung der Einstellregler (4) verhindert wird.

8. Auslöser nach einem der Ansprüche 6 und 7, **dadurch gekennzeichnet, dass** die Abdeckung (23) aus einer an der Frontseite (22) des Auslösers angebrachten und die Einstellregler (4) in der Schließstellung abdeckenden Tür besteht, an welcher Tür ein Zapfen (24) ausgebildet ist, der in der Schließstellung der Abdeckung ein zugeordnetes Element (25) der Verarbeitungseinheit betätigt, derart dass die Einstellfunktion des Tastenfelds gesperrt wird.

9. Auslöser nach Anspruch 8, **dadurch gekennzeichnet, dass** der Zapfen ein ausbrechbares Element (26) umfasst, derart dass die in der Schließstellung der Abdeckung (23) wirksame Sperre der Einstellfunktion des Tastenfelds aufgehoben werden kann.

10. Auslöser nach irgendeinem der Ansprüche 1 bis 9, **dadurch gekennzeichnet, dass** die ersten Verarbeitungsmittel (15) einen Eingang (A) umfassen, der es ermöglicht, die Berücksichtigung der über die Ferneinstellfunktion übertragenen Parameter (P2) wahlweise zuzulassen oder nicht.
